# EUROPEAN PATENT APPLICATION

(11) **EP 2 042 796 A1**
(43) Date of publication of application: **01.04.2009**
(21) Application number: 07425584.5
(22) Date of filing: 21.09.2007
(51) Int. Cl.: F16L 21/00, F16L 59/18, F24F 13/02

(54) **Axial joint system of air conditioning ducts**

(71) Applicant: P3 S.r.l., 35010 Ronchi di Villafranca Padovana (Padova) (IT)
(72) Inventor: Griggio, Luciano, 35010 Ronchi di Villafranca Padovana (Padova) (IT)
(74) Representative: Bottero, Claudio

(57) **Abstract**

An axial joint system (101; 201; 301; 501) of a plurality of pre-insulated ducts (106; 206; 306) is illustrated, comprising:
- an annular joint element (102; 202; 302; 402; 502) provided, at its axially opposed parts, with a first (103; 203; 303; 503) and a second (104; 204; 304; 504) perimetral seat, suitable for housing an end portion (105; 205; 305) respectively of a first and a second duct (106; 206; 306) of said plurality of ducts; and
- fixing means (107; 207; 307; 507) for mechanically fixing the annular joint element (102; 202; 302; 402; 502) to said first and second ducts (106; 206; 306).

It is also illustrated a method of axially joining a plurality of pre-insulated ducts (106; 206; 306), as well as a piping comprising a plurality of ducts (106; 206; 306) connected by a plurality of axial joint systems (101; 201; 301; 501).

## Description

### Background of the invention

The present invention refers to an axial joint system of air conditioning equipment ducts.

In the scope of the present description and in the following claims, the terms "axial union" and "axial joint" are intended to indicate a butt-type joint between adjacent ducts.

In particular, the present invention concerns an axial joint system of pre-insulated material air conditioning equipment ducts.

The present invention further concerns a method of axially joining a plurality of ducts of such type, as well as the piping thus obtained.

### Prior Art

The use of pre-insulated ducts for ventilation, heating and conditioning system is widely known in the sector. These are ducts for the transport of medium/low-pressure air and at low speed which are made from insulated panels.

Various techniques have been developed over the years to axially join two ducts of this type.

The most cost-effective known solution consists in using adhesives reinforced by adhesive tapes. In other words, along the surfaces of the ducts which come into contact by means of the joint, an adhesive is applied and, subsequently, an adhesive tape, at the outer joint lines. However, such technique also presents, besides all the disadvantages of chemical-type fixing, i.e., long laying times, irreversibility of the fixing and difficulty in aligning the ducts during the laying step, problems of low mechanical sealing and, in the case of ducts positioned near walls, floors or ceilings, problems of tape application.

A second solution, in alternative or in addition to the above-described adhesive, provides for the use of U-bolts to be applied at the joint lines of the ducts. Said U-bolts are fixed to the ends of both ducts so that such ends are fixed to each other. Once the U-bolts have been fixed, one proceeds with the application of the tape.

Even such solution, however, presents the problem of the difficulty of aligning the ducts during their union.

According to an alternative solution, joint elements with a substantially U-shaped section provided with an outer appendix are used. The end of the first duct to be joint is housed inside such joint element and fixed to it by means of adhesives and/or mechanical fixing means. Subsequently, the end of the second duct is housed inside a joint element analogous to the first one or inside at least one joint element with a U-section, and is analogously fixed to it. Finally, the two joint elements are fixed to each other by means of mechanical fixing means.

Such technique requires long times, high costs and the need to use a seal to avoid leakage problems. Moreover, the finished product may be visually unattractive and, if the joint elements are made of aluminium, it may also present the problem of the so-called thermal bridges. The latter are phenomena that occur when conductive materials, such as aluminium, are used, which create a heat contact point between the two environments to be isolated with the resulting likely formation of condensation and the obvious disadvantages of the case.

A further duct joint system, currently used, provides for the arrangement of flanges along the perimeter of the two surfaces to be joint. Such flanges are then connected by means of an inner or outer bayonet.

Such system may require the use of a seal to avoid leakage problems. Moreover, it is expensive and it requires the use of a large number of components. In addition to this, the flanges must be fixed to the ducts by means of glues or rivets, with resulting long fixing times.

Moreover, it is very often necessary to make both the flanges and the bayonet in aluminium, with resulting problems of friction between the two parts, in addition to thermal bridges.

The present invention therefore aims to provide for an axial joint system of pre-insulated material ducts which is simple, cost-effective and with good air tightness features.

A further objective of the present invention is to provide for a method of axially joining two pre-insulated material ducts which is simple and reversible.

### Summary of the invention

The Applicant has noted that, by supplying an axial joint system comprising an annular joint element, provided with two seats suitable for housing the end portions of the ducts to be joint, and a means to mechanically fix such annular joint element to the ducts, it is possible to obviate said drawbacks by ensuring good pneumatic seal.

In particular, the Applicant has perceived that by having an axial joint system of such type, it is possible to simplify the union process of the two ducts, as well as to reduce the assembly costs and times and, at the same time, to increase pneumatic sealing, while avoiding aesthetic problems, problems of thermal bridges or of friction between the parts making up the system.

According to a first aspect thereof, the invention therefore concerns an axial joint system of a plurality of pre-insulated material ducts comprising:
- an annular joint element provided, at its axially opposed parts, with a first and a second perimetral seat, suitable for housing an end portion respectively of a first and a second duct of said plurality of ducts; and
- fixing means for mechanically fixing the annular joint element to said first and second ducts.

The annular joint element preferably comprises a radially inner face and a radially outer face connected to each other by at least one dividing element.

In the present context, the term "radially" indicates the direction going from the centre of the duct outwards, while the term "axially" indicates the direction of the longitudinal axis of the duct or, in other words, the direction of the flow of the fluid which, in service conditions, goes through the duct.

The radially inner and outer faces and the dividing element define the above-mentioned first and second seats.

The Applicant has perceived that, by making a radially inner face with a greater width compared to the radially outer face, it is possible to simplify the insertion process of the ducts into the seats. In the present context, by "width" of the face it is intended the dimension of the face which extends along the longitudinal axis of the ducts.

Advantageously, the dividing element is provided with holes. In such a way, it is possible to assist in the fixing by means of a chemical fixing means to be applied onto the contact surfaces of the ducts to be joint, in the cases in which it is required by particular needs.

The annular joint element is preferably made of polymeric material so as to avoid problems of friction and thermal bridges. Still more preferably, it is in one of the following materials: polyvinyl chloride, nylon, thermosetting polymeric material reinforced with reinforcing fibres. The latter confers in fact advantageous mechanical properties to the annular joint element.

The fixing means preferably comprise at least one U-bolt which allows to obtain good mechanical sealing, particularly if it is made of metallic material.

The U-bolt is preferably provided with a base which is substantially flat so that it results easy to apply a manual pressure on it during the assembly and so that it does not result bulky.

The U-bolt is advantageously provided with grooves suitable for receiving the annular joint element and preventing the U-bolt from casually dissociating from it.

According to an embodiment alternative to the U-bolt, the fixing means are integrally formed with the annular joint element. In this way, the joint system comprises a lower number of elements and therefore presents less maintenance problems.

In this case, it is advantageous that the annular joint element comprises mobile portions between an open position and a close position. The mobile portions are suitable for allowing the insertion of the duct end portions into the seats of the annular joint element when it is in open position and the fixing of the annular joint element in close position.

In such case, it is possible to provide that said mobile portions comprise semi-portions removably snap-engaged with and rotatable around a pin annular element so as to avoid the fixing means from being casually dissociated from the ducts.

The annular joint element may have a polygonal or circular shape so as to be applied to ducts with a section of analogous shape, which reduces the mechanical energy losses of the fluids transported therein.

The Applicant has further verified that, by providing a method of joining a plurality of ducts which provides for providing a joint system - comprising an annular joint element provided with two annular seats and a mechanical fixing means -, positioning the end portions of the two ducts to be joint into the two seats, and mechanically fixing the annular joint element to the ducts by means of the mechanical fixing means, it is possible to achieve a simple, cost-effective and reversible joint method.

Therefore, according to a second aspect thereof, the present invention concerns a method of axially joining a plurality of pre-insulated material ducts comprising the steps of:
a. providing an axial joint system comprising:
   - an annular joint element provided, at its axially opposed parts, with a first and a second perimetral seat; and
   - a mechanical fixing means;
b. positioning an end portion of a first duct into the first seat;
c. positioning an end portion of a second duct into the second seat;
d. mechanically fixing the annular joint element to said first and second ducts by means of said mechanical fixing means.

Advantageously, the method comprises the preliminary step of:
e. applying a chemical fixing means at the contact surface of at least one of the ducts to be joined.

In such a way, it is possible to assist in the fixing of the two ducts with a chemical fixing means, when particular conditions require it.

Further preferred characteristics of the joint system of the two pre-insulated material ducts and of the joint method of the same according to the present invention are illustrated in the appended claims whose content is integrally incorporated herein for reference.

### Brief description of the figures

Features and advantages of the invention will be clear from the following description of some preferred examples of duct joint systems, and of a method of joining the same according to the invention, made - by way of example and not limitation - in reference to the accompanying drawings in which:
- figure 1 shows a perspective view of the joint system according to a first embodiment of the invention;
- figures 2a - 2c show the steps of the joint method of the two ducts, by means of the joint system of figure 1, according to one embodiment of the invention;
- figure 3 shows a partial perspective view of the joint system according to a second embodiment of the invention;
- figures 4a - 4c show the steps of the joint method of the two ducts, by means of the joint system of figure 3, according to one embodiment of the invention;
- figure 5 shows a front view of an annular joint element of a joint system according to a third embodiment of the present invention;
- figure 6 shows a front view of an annular joint element of a joint system according to a fourth embodiment of the present invention;
- figure 7 shows a view of the A-A section of figure 5;
- figure 8 shows a partial cross-section view of the joint system according to the first, second, third and fourth embodiments of the invention, after its application; and
- figures 9a and 9b show a sectional view of a joint system according to a fifth embodiment of the invention respectively in closing and open position.

### Detailed description of the preferred embodiments

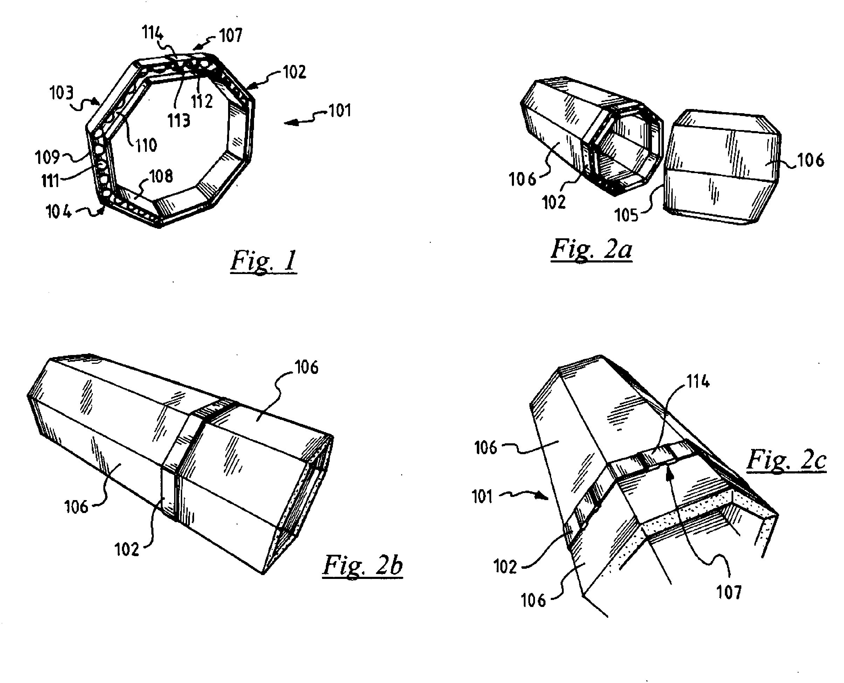

With reference to figures 1 - 2c, with 101 is generally indicated an axial joint system of a plurality of pre-insulated ducts 106, according to a first embodiment of the present invention.

The joint system 101 comprises an annular joint element 102 provided with a first perimetral seat 103 and a second perimetral seat 104, formed by axially opposed parts of the annular joint element 102 itself. Said first seat 103 is suitable for housing an end portion 105 of a first duct 106 and said second seat 104 is suitable for housing an end portion 105 of a second duct 106.

The joint system 101 according to the invention also comprises fixing means 107 for mechanically fixing the annular joint element 102 to said first and second ducts 106.

The annular joint element 102 comprises a radially inner face 108 and a radially outer face 109 which are connected to each other by a dividing element 110.

The radially inner 108 and outer 109 faces define, together with the dividing element 110, the first 103 and second 104 seats.

According to one embodiment not shown in the figures, the radially inner face 108 has a greater width compared to the radially outer face 109, or, in other words, it extends axially on a greater length compared to said radially outer face 109.

Said dividing element 110 is substantially orthogonal to said radially inner 108 and outer 109 faces and is provided with holes 111.

The fixing means 107 comprise penetration devices 112 suitable for penetrating into said first and second ducts 106, without reaching the internal face of the ducts themselves.

To this aim, they comprise at least one pointed appendix 113.

The fixing means 107 comprise at least one U-bolt which is preferably in metallic material.

As may be seen especially in figure 2c, said U-bolt comprises a substantially flat base 114 and at least two pointed appendices 113 which extend from axially opposed edges of said base 114 in a direction substantially perpendicular to the base 114 itself so as to create a receiving seat of the annular joint element 102.

The U-bolt comprises, between the base 114 and each pointed appendix 113, at least one groove 315 suitable for retaining the radially outer face 109 of the annular joint element 102.

The U-bolt preferably comprises four pointed appendices 113 and two grooves 315.

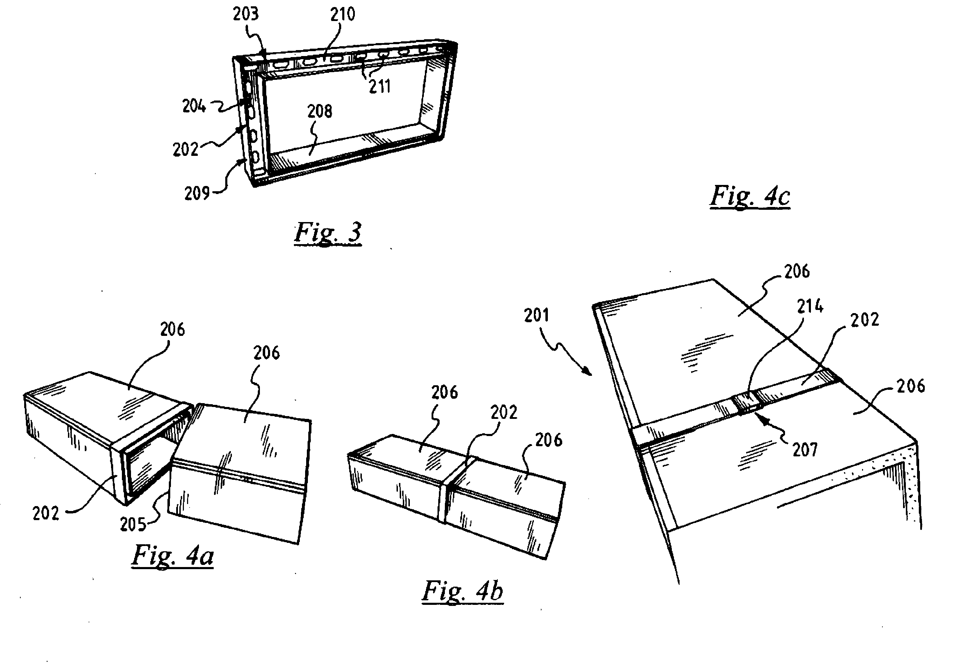

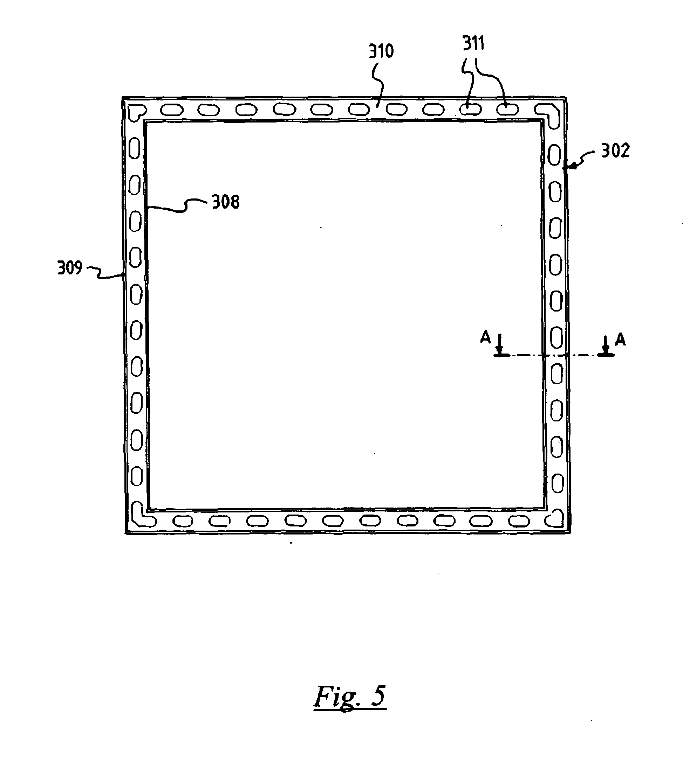

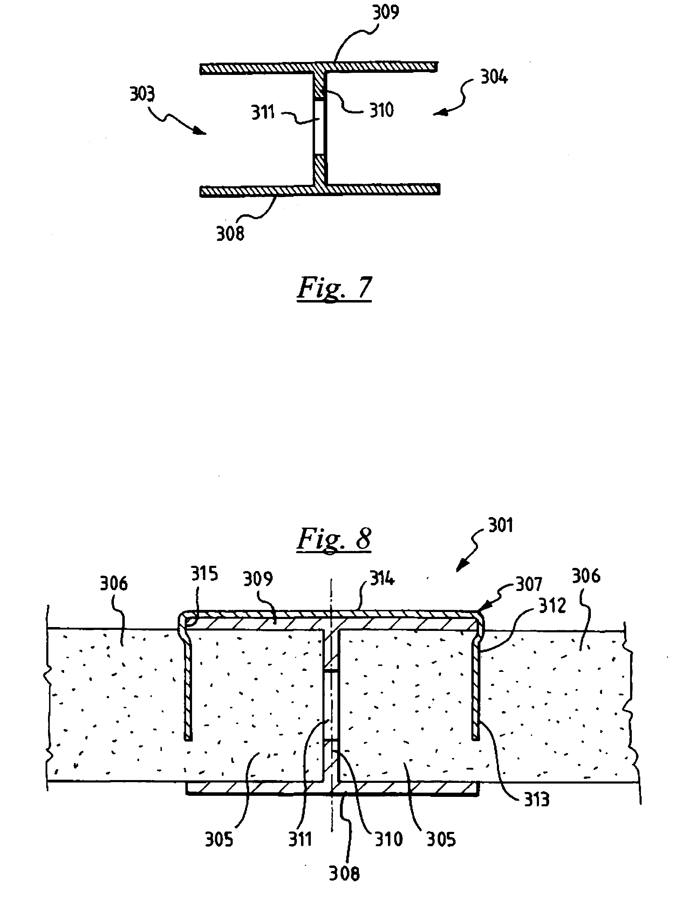

In figures 3-9b, further embodiments of the joint system according to the invention are schematically illustrated.

In the following description and in said figures, the elements of the joint system structurally or functionally equivalent to those previously illustrated with reference to the first embodiment will be indicated with analogous reference numerals differing only in the first digit. Such first digit varies from 2 to 5 depending of the embodiment (second - fifth) to which it refers.

According to the first, second and third embodiments, illustrated respectively in figures 1 - 2c, 3 - 4c and 5, the annular joint element 102; 202; 302; 502, has a polygonal shape. In particular, in the second and third embodiments, it has the shape of a quadrilateral. More in particular, in the second one it has a rectangular shape and in the third one it has the shape of a square. In the first embodiment, the annular joint element 102 has an octagonal shape.

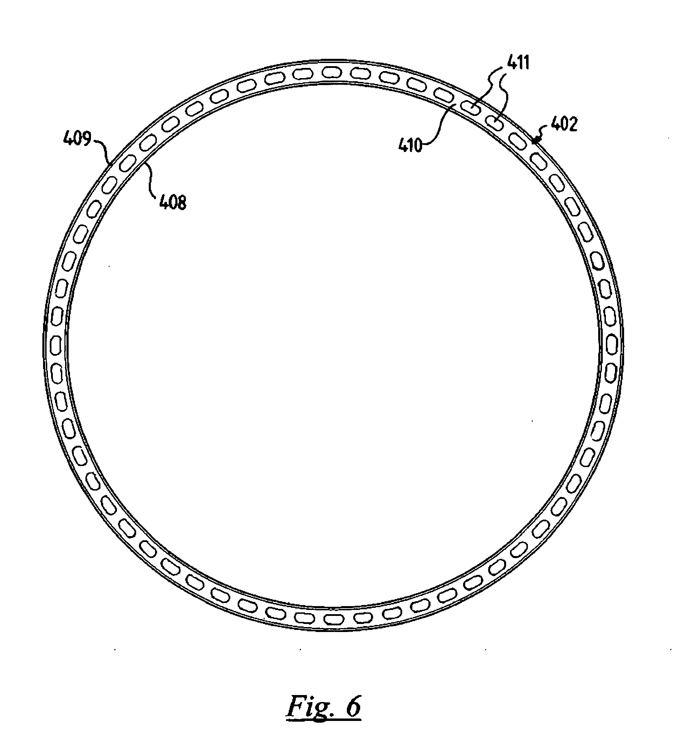

While, in the fourth embodiment, illustrated in figure 6, the annular joint element 402 has a circular shape. Obviously, the shape of the annular joint element 102; 202; 302; 402; 502 depends on the shape of the ducts 106; 206; 306 to be housed and may therefore be of any suitable shape.

According to the fifth embodiment, the fixing means 507 are integrally formed with the annular joint element 502.

In such case, they are positioned on at least one of the radially inner face 508 and the radially outer face 509 of the annular joint element 502.

Each face radially provided with fixing means 507 comprises mobile portions between an open position and a close position. This allows for the insertion of the end portions 105 of the ducts 106 to be joined into the seats 503, 504 of the annular joint element 502 in open position, and the fixing of the annular joint element 502 in close position.

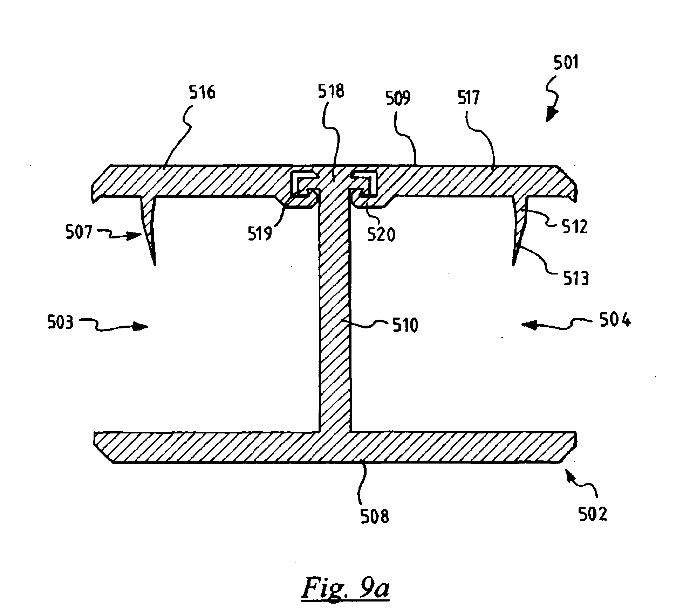

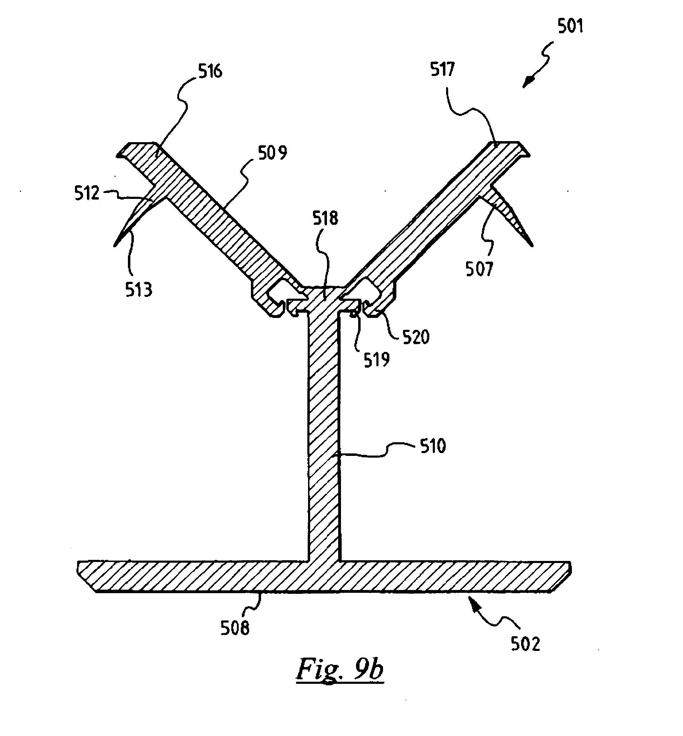

As may be seen in figure 9a and 9b, said mobile portions comprise a first semi-portion 516 which partially defines said first seat 503 and a second semi-portion 517 which partially defines said second seat 504. The first 516 and second 517 semi-portions are removably snap-engaged with a pin annular element 518, interposed therebetween, around which they are rotatable between said open position and said close position.

The pin annular element 518 is provided with at least one first locking device 519 suitable for being coupled to at least one corresponding second locking device 520 obtained in said first 516 and second 517 semi-portions so as to prevent the rotation of the latter after the annular joint element 502 has been fixed to the ducts 106; 206; 306 to be joint. In other words, the first locking device 519 and the corresponding second locking device 520 are formed so as to, once coupled, or, in other words, after the end portions 105; 205; 305 of the ducts 106; 206; 306 have been inserted into the seats 503, 504 and after the semi-portions 516, 517 have been brought into close position, make the reverse operation, i.e. that of opening the semi-portions 516, 517, difficult.

The dividing element 510 of the joint system 501 according to the fifth embodiment of the invention is not provided with holes, but may be so. In such a way, it is possible to use adhesives which directly set on the contact surfaces of the ducts 106; 206; 306 to be connected.

The annular joint element 102; 202; 302; 402; 502 is in polymeric material. It is preferably made of one or more of the following materials: polyvinyl chloride, nylon, thermosetting polymeric material reinforced with reinforcing fibres.

The thermosetting polymeric material preferably comprises a thermosetting resin.

The reinforcing fibres are selected in the group comprising: glass fibres, aramidic fibres and carbon fibres.

The annular joint element 102; 202; 302; 402; 502 may be made of a metallic material like aluminium.

By axially joining a plurality of ducts 106; 206; 306 by means of a plurality of joints systems 101; 201; 301; 501, a piping is obtained in which the pre-insulated ducts 106; 206; 306 comprise at least one outer layer and one insulating layer and, preferably, also comprise an inner layer so that the insulating layer is interposed between said outer layer and said inner layer.

At least one of said outer layer and said inner layer comprises aluminium.

The insulating layer comprises, instead, at least one of the materials selected from the group comprising: expanded polyurethane, expanded polyisocyanurate, expanded phenolic material, mineral wools.

Each U-bolt of the piping is suitable for being applied above the corresponding annular joint element 102 after the end portions 105 of said first and second ducts 106 have been housed in the seats 103, 104 of the annular joint element 102 itself.

The base 114 of the U-bolt, after its application, is substantially parallel to the radially outer face 109, and therefore to the radially inner face 108, of the annular joint element 102 where it is applied.

Referring in particular to figures 2a - 2c and 4a - 4c, a preferred embodiment of a method of axially joining a plurality of ducts 106; 206; 306 in pre-insulated material will now be described.

According to the present invention, the method comprises a first step of:
a. providing an axial joint system 101; 201; 301; 501 comprising:
   - an annular joint element 102; 202; 302; 402; 502 provided, at its axially opposed parts, with a first 103; 203; 303; 503 and a second perimetral seat 104; 204; 304; 504; and
   - a mechanical fixing means 107; 207; 307; 507.

The method then provides for the step, especially visible in figures 2a and 4a, of:
b. positioning an end portion 105; 205; 305 of a first duct 106; 206; 306 into the first seat 103; 203; 303; 503.

As shown in figures 2b and 4b, it is subsequently carried out a step of:
c. positioning an end portion 105; 205; 305 of a second duct 106; 206; 306 into the second seat 104; 204; 304; 504.

Finally, the method according to the invention provides for the carrying out of the step of:
d. mechanically fixing the annular joint element 102; 202; 302; 402; 502 to said first and second ducts 106; 206; 306 by means of said mechanical fixing means 107; 207; 307; 507.

Such step, according to preferred embodiments, is clearly shown in figures 2c and 4c.

According to embodiments not shown in the figures, the method comprises the preliminary step of:
e. applying a chemical fixing means at the contact surface of at least one of the ducts 106; 206; 306.

In other words, it is possible to apply a quantity of suitable adhesive onto one or both contact surfaces of the ducts 106; 206; 306 to be joined, or onto their portions, before inserting their end portions into the corresponding first 103; 203; 303; 503 and second seats 104; 204; 304; 504.

According to one embodiment of the present invention visible in figures 2c and 4c, said step d of mechanical fixing of the annular joint element 102; 202; 302; 402 to said first and second ducts 106; 206; 306 by means of said mechanical fixing means 107; 207; 307 comprises the steps of:
f. providing a U-bolt;
g. pressure-applying said U-bolt into the end portions 105; 205; 305 of said first and second ducts 106; 206; 306 on the annular joint element 102; 202; 302; 402.

According to an alternative embodiment, the method comprises a preliminary step of:
- opening mobile portions, provided with fixing means 507, of the annular joint element 502, towards an open position, shown in figure 9b.

In such case, said step d comprises the step of closing the mobile portions of the annular joint element 502 in a close position, shown in figure 9a.

The embodiments of the joint system and the embodiments of the corresponding joint method described and illustrated herein are illustrative and non limiting examples of the invention. Variations and/or additions may be applied thereto by the skilled in the art without departing from the protection scope of the patent.

## Claims

1. An axial joint system (101; 201; 301; 501) of a plurality of pre-insulated ducts (106; 206; 306) comprising:
- an annular joint element (102; 202; 302; 402; 502) provided, at its axially opposed parts, with a first (103; 203; 303; 503) and a second (104; 204; 304; 504) perimetral seat, suitable for housing an end portion (105; 205; 305) respectively of a first and a second duct (106; 206; 306) of said plurality of ducts; and
- fixing means (107; 207; 307; 507) for mechanically fixing the annular joint element (102; 202; 302; 402; 502) to said first and second ducts (106; 206; 306).

2. A joint system (101; 201; 301; 501) according to claim 1, wherein the annular joint element (102; 202; 302; 402; 502) comprises a radially inner face (108; 208; 308; 408; 508) and a radially outer face (109; 209; 309; 409; 509) connected to each other by at least one dividing element (110; 210; 310; 410; 510), said radially inner (108; 208; 308; 408; 508) and outer (109; 209; 309; 409; 509) faces and said at least one dividing element (110; 210; 310; 410; 510) defining the first (103; 203; 303; 503) and the second (104; 204; 304; 504) seat.

3. A joint system (101; 201; 301; 501) according to claim 2, wherein the radially inner face (108; 208; 308; 408; 508) has a greater width compared to the radially outer face (109; 209; 309; 409; 509).

4. A joint system (101; 201; 301; 501) according to claim 2 or 3, wherein said dividing element (110; 210; 310; 410; 510) is substantially orthogonal to said radially inner (108; 208; 308; 408; 508) and outer (109; 209; 309; 409; 509) faces.

5. A joint system (101; 201; 301) according to any of claims 2 - 4, wherein said dividing element (110; 210; 310; 410) is provided with holes (111; 211; 311; 411).

6. A joint system (101; 201; 301; 501) according to any one of the previous claims, wherein said annular joint element (102; 202; 302; 402; 502) is in polymeric material.

7. A joint system (101; 201; 301; 501) according to claim 6, wherein said annular joint element (102; 202; 302; 402; 502) is made of at least one of the following materials: polyvinyl chloride, nylon, thermosetting polymeric material reinforced with reinforcing fibres.

8. A joint system (101; 201; 301; 501) according to claim 7, wherein said thermosetting polymeric material comprises a thermosetting resin.

9. A joint system (101; 201; 301; 501) according to claim 7 or 8, wherein said reinforcing fibres are selected in the group comprising: glass fibres, aramidic fibres and carbon fibres.

10. A joint system (101; 201; 301; 501) according to any of claims 1 - 5, wherein said annular joint element (102; 202; 302; 402; 502) is in metallic material.

11. A joint system (101; 201; 301; 501) according to claim 10, wherein said annular joint element (102; 202; 302; 402; 502) is in aluminium.

12. A joint system (101; 201; 301; 501) according to any one of the previous claims, wherein said fixing means (107; 207; 307; 507) comprise penetration devices (112; 312; 512) suitable for penetrating into said first and second ducts (106; 206; 306).

13. A joint system (101; 201; 301; 501) according to claim 12, wherein said penetration devices (112; 312; 512) comprise at least one pointed appendix (113; 313; 513).

14. A joint system (101; 201; 301) according to one of the previous claims, wherein said fixing means (107; 207; 307) comprise at least one U-bolt.

15. A joint system (101; 201; 301) according to claim 14, wherein said U-bolt is in metallic material.

16. A joint system (101; 201; 301) according to claim 14 or 15, wherein said U-bolt comprises a substantially flat base (114; 214; 314) and at least two pointed appendices (113; 313) which extend from axially opposed edges of said base (114; 214; 314) in a direction substantially perpendicular to the base (114; 214; 314) so as to define a receiving seat of the annular joint element (102; 202; 302; 402).

17. A joint system (101; 201; 301) according to claim 16, wherein the U-bolt comprises, between the base (114; 214; 314) and the penetration devices (112; 312; 512), at least one groove (315) suitable for retaining the radially outer face (109; 209; 309; 409) of the annular joint element (102; 202; 302; 402).

18. A joint system (501) according to one of claims 1 - 13, wherein said fixing means (507) are integrally formed with the annular joint element (502).

19. A joint system (501) according to claim 18, wherein said fixing means (507) are positioned on at least one between a radially inner face (508) and a radially outer face (509) of the annular joint element (102; 202; 302; 402).

20. A joint system (501) according to claim 19, wherein each face provided with fixing means (507) comprises mobile portions between an open position and a close position, said mobile portions being suitable for allowing the insertion of the end portions (105; 205; 305) of the ducts (106; 206; 306) into the seats (503, 504) of the annular joint element (502) in open position and the fixing of the annular joint element (502) in close position.

21. A joint system (501) according to claim 20, wherein said mobile portions comprise a first semi-portion (516) which partially defines said first seat (503) and a second semi-portion (517) which partially defines said second seat (504), said first (516) and second (517) semi-portions being removably snap-engaged with a pin annular element (518) and being rotatable around such pin annular element (518) between said open position and said close position.

22. A joint system (101; 201; 301; 501) according to any one of the previous claims, wherein the annular joint element (102; 202; 302, 502) has a polygonal shape.

23. A annular joint system (201; 301; 501) according to claim 22, wherein the annular joint element (202; 304; 504) has the shape of a quadrilateral.

24. A joint system (101) according to claim 22, wherein the annular joint element (102) has an octagonal shape.

25. A annular joint system (401; 501) according to any of claims 1 - 21, wherein the annular joint element (402; 502) has a circular shape.

26. A piping comprising a plurality of ducts (106; 206; 306) axially connected by a plurality of joint systems (101; 201; 301; 501) according to any one of the previous claims.

27. A piping according to claim 26, wherein each of said pre-insulated ducts (106; 206; 306) comprises at least one outer layer and one insulating layer.

28. A piping according to claim 26 or 27, wherein each of said pre-insulated ducts (106; 206; 306) comprises an outer layer, an inner layer and an insulating layer interposed between said outer layer and said inner layer.

29. A piping according to claim 27 or 28, wherein at least one of said outer layer and said inner layer comprises aluminium.

30. A piping according to one of claims 27 - 29, wherein said insulating layer comprises at least one of the materials selected from the group comprising: expanded polyurethane, expanded polyisocyanurate, expanded phenolic material, mineral wools.

31. A piping according to one of claims 26 - 30, wherein each U-bolt is suitable for being applied above the corresponding annular joint element (102; 202; 302; 402) after the end portions (105; 205; 305) of said first and second ducts (106; 206; 306) have been housed in the seats (103, 104; 203, 204; 303, 304) of the annular joint element (102; 202; 302; 402) itself.

32. A piping according to one of claims 26 - 31, wherein after the application of the U-bolt, said base (114; 214; 314) is substantially parallel to the radially outer face (109; 209; 309; 409) of the annular joint element (102; 202; 302; 402) where it is applied.

33. A method of axially joining a plurality of pre-insulated material ducts (106; 206; 306) comprising the steps of:
a. providing an axial joint system (101; 201; 301; 501) comprising:
- an annular joint element (102; 202; 302; 402; 502) provided, at its axially opposed parts, with a first (103; 203; 303; 503) and a second (104; 204; 304; 504) perimetral seat; and
- a mechanical fixing means (107; 207; 307; 507);
b. positioning an end portion (105; 205; 305) of a first duct (106; 206; 306) into the first seat (103; 203; 303; 503);
c. positioning an end portion (105; 205; 305) of a second duct (106; 206; 306) into the second seat (104; 204; 304; 504);
d. mechanically fixing the annular joint element (102; 202; 302; 402; 502) to said first and second ducts (106; 206; 306) by means of said mechanical fixing means (107; 207; 307; 507).

34. A method of axially joining a plurality of pre-insulated material ducts (106; 206; 306) according to claim 36, comprising the preliminary step of:
e. applying a chemical fixing means at the contact surface of at least one of the ducts (106; 206; 306) to be joined.

35. A method of axially joining a plurality of pre-insulated material ducts (106; 206; 306) according to claim 33 or 34, wherein said step d of mechanical fixing the annular joint element (102; 202; 302; 402) to said first and second ducts (106; 206; 306) by means of said mechanical fixing means (107; 207; 307) comprises the steps of:
f. providing a U-bolt;
g. pressure-applying said U-bolt into the end portions (105; 205; 305) of said first and second ducts (106; 206; 306) on the annular joint element.

36. A method of axially joining a plurality of pre-insulated material ducts (106; 206; 306) according to claim 33 or 34, wherein the joint element is provided with mobile portions and wherein the method comprises a preliminary step of:
- opening mobile portions, provided with fixing means (507), of the annular joint element (502), towards an open position.

37. A method of axially joining a plurality of pre-insulated material ducts (106; 206; 306) according to claim 36, wherein said step d comprises the step of:
- closing the mobile portions of the annular joint element (502) in a close position.
